# EUROPÄISCHE PATENTSCHRIFT

(11) **EP 2 546 820 B1**
(45) Veröffentlichungstag und Bekanntmachung des Hinweises auf die Patenterteilung: **30.07.2014**
(21) Anmeldenummer: 12171957.9
(22) Anmeldetag: 14.06.2012
(51) Int. Cl.: G09B 3/04, G09B 1/14, G09B 19/22, A63F 11/00

(54) **Spiel- und Lerngerät mit Selbstkontrolle**
Toy and learning device with self-control
Appareil d'apprentissage et de jeu avec contrôle automatique

(30) Priorität: 15.07.2011 DE 202011050735 U
(43) Veröffentlichungstag der Anmeldung: 16.01.2013
(73) Patentinhaber: LOGO Lern-Spiel-Verlag GmbH, 45141 Essen (DE)
(72) Erfinder: Clasen, Eva-Marie, 46284 Dorsten (DE); Papenberg, Timo-Alexander, 45128 Essen (DE); Meier, Johannes-Peter, 45236 Essen (DE)
(74) Vertreter: Bittner, Thomas L.

(56) Entgegenhaltungen:
- WO-A1-94/17876
- DE-A1- 4 113 520
- DE-A1-102007 003 461
- DE-U1- 9 014 310
- GB-A- 2 436 638

## Beschreibung

Die Erfindung betrifft ein Spiel- und Lemgerät mit Selbstkontrolle.

### Hintergrund der Erfindung

Bei einem bekannten Lern- und Spielgerät dieser Art hat jede in einem Aufgabenbuch gestellte Aufgabe eine Farbe und eine Lösung. Mithilfe eines Kontrollgerätes mit drehbaren Rädchen ordnen die Spieler, insbesondere Kinder, die Farbe der Aufgabe der passenden Lösung zu, und können dann anhand eines Lösungsbuches vergleichen, ob sie die betreffende Aufgabenfarbe der mit dieser übereinstimmenden Lösungsfarbe zugeordnet haben.

Das Dokument GB 2 436 638 A betrifft ein Lernsystem mit einem Spielbrett, Spielsteinen sowie einer Lernkarte. Am rechten Rand des Spielbretts sind zehn Aufnahmen gebildet, die jeweils zehn Fragen der Lernkarte zugeordnet sind. In die Aufnahmen werden die Spielsteine angeordnet, um die Fragen der Lernkarte zu beantworten.

In dem Dokument DE 41 13 520 A1 ist eine Lernvorrichtung mit einer Grundplatte, Griffsteinen und einer Lernkarte offenbart. An randseitigen Spalten der Grundplatte sind Einzelfelder gebildet, welche die Griffsteine aufnehmen, um die Fragen der Lernkarte zu beantworten. Jedem Feld ist hierbei eine Frage beziehungsweise Lösung der Lernkarte zugeordnet.

Das Dokument WO 94/17876A1 betrifft einen Spielkartengeber, bei dem eine Schublade in einer äußere Hülle gebildet ist.

### Zusammenfassung der Erfindung

Der Erfindung liegt die Aufgabe zugrunde, ein Spiel- und Lerngerät mit Selbstkontrolle anzugeben, das einfach ausgebildet und einfach zu handhaben ist und einen hohen Spiel- und Lernwert hat.

Erfindungsgemäß wird die Aufgabe mit einem gemäß den Merkmalen des Anspruchs 1 ausgebildeten Spiel- und Lerngerät gelöst. Vorteilhafte Weiterbildungen der Erfindung sind Gegenstand der Unteransprüche.

Die Erfindung umfasst den Gedanken eines Spiel- und Lerngerätes mit einem flachen bzw. scheibenförmigen, durch eine Vorderwand und Seitenwände begrenzten Hohlkörper mit einer in dessen offene Rückseite integrierten Schublade zur Unterbringung einer Mehrzahl von Lernkarten, die jeweils eine Aufgabenseite und eine Lösungsseite aufweisen. Auf der Vorderwand des Hohlkörpers ist ein Ablagefach zum Auflegen der aus der Schublade entnommenen Lernkarten ausgebildet. In der Vorderwand vorgesehene erste Vertiefungen dienen zur sicher gehaltenen Positionierung einer Mehrzahl von zur Lösung der Aufgaben benötigten, durch unterschiedliche Kennzeichen wie Farben, Symbole, geometrische Figuren oder dergleichen individualisierten Spielsteinen. Neben dem Ablagefach bzw. der in diesem abgelegten Lernkarte sind den jeweiligen Aufgaben bzw. Lösungen zugeordnete zweite Vertiefungen zum Einstecken der zu den Aufgaben jeweils passenden, aus den ersten Vertiefungen entnehmbaren Spielsteine angeordnet. Das so ausgebildete, in einer kindgerechten äußeren Form gestaltete - einstückige - Spielgerät ist klein und kompakt ausgebildet und auch für kleinere Kinder bei der Lösung der Aufgaben und der Lösungskontrolle übersichtlich und einfach zu handhaben.

Es ist ein Spiel- und Lerngerät mit Selbstkontrolle geschaffen, bei dem eine durch unterschiedliche Kennzeichen charakterisierte Aufgabe durch die Zuordnung des tatsächlich zutreffenden Kennzeichens lösbar ist.

Die Außenkontur des Spiel- und Lerngerätes ist in Form eines Hauses ausgebildet, wobei die ersten Vertiefungen von dessen schrägen Dachkanten ausgehen und die zweiten Vertiefungen von den beiden senkrechten Seitenkanten des Hauses ausgehen. In dem zwischen den beiderseitigen zweiten Vertiefungen liegenden Bereich ist das von einem im Wesentlichen umlaufenden Steg begrenzte Ablagefach für die Lernkarten ausgebildet. Es können mehrere Lernkarten übereinandergelegt werden. Die Lernkarten sind sicher in dem Ablagefach positioniert.

Die Spielsteine sind in den ersten und zweiten Vertiefungen so verrastbar oder verklemmbar, dass sie sich nicht selbsttätig lösen können, jedoch von einem Kind manuell leicht entnommen bzw. eingesteckt werden können.

Bei einer zweckmäßigen Ausgestaltung der Erfindung kann vorgesehen sein, dass die Spielsteine und die Vertiefungen vorzugsweise im Wesentlichen quaderförmig ausgebildet sind.

Eine vorteilhafte Ausführungsform der Erfindung sieht vor, dass auf der Vorderwand des Hohlkörpers an die ersten Vertiefungen anschließende halbkreisförmige Erhöhungen ausgebildet sind, die zusammen mit den eingesteckten Spielsteinen die Form von Dachziegeln aufweisen.

Bevorzugt sieht eine Fortbildung der Erfindung vor, dass im Bereich der zweiten Vertiefungen in die Seitenwände des Hohlkörpers Einwölbungen zur Erleichterung der Entnahme der Spielsteine eingeformt sind.

Bei einer vorteilhaften Ausgestaltung der Erfindung kann vorgesehen sein, dass die in den Hohlkörper integrierte Schublade eine mit einer Anschlagplatte versehene Schubladenplatte umfasst, die leichtgängig in Führungsnuten von an der Rückseite der Vorderwand des Hohlkörpers ausgebildeten, die Schublade an den Längsseiten begrenzenden Schubladenwänden geführt ist.

Eine bevorzugte Weiterbildung der Erfindung sieht vor, dass die Schublade an ihren Schmalseiten durch die an der Vorderwand des Hohlkörpers anschlagende Anschlagplatte und durch an der gegenüberliegenden Seite der Schubladenplatte ausgebildete Schubladenwände sowie an der Rückseite der Vorderwand ausgebildete Wandabschnitte begrenzt ist. Die freien Stirnseiten der Schubladenwände und der Wandabschnitte sind bei eingeschobener Schubladenplatte aneinander verklemmt, um die Schubladenplatte in der Schließposition zu arretieren.

Bei einer zweckmäßigen Ausgestaltung der Erfindung kann vorgesehen sein, dass ein die Vorderwand des Hohlkörpers überragender Rand der Anschlagplatte die untere Begrenzung des Ablagefaches für die Lernkarten bildet. Gleichzeitig kann der überragende Rand als Griffelement zum Öffnen der Schublade ausgebildet sein.

Eine vorteilhafte Ausführungsform der Erfindung sieht vor, dass die unterschiedliche Kennzeichnung der Spielsteine und der auf der Lernkarte angegebenen Aufgaben auf verschiedene Weise erfolgen kann. Besonders bevorzugt ist eine Kennzeichnung durch unterschiedliche Farben, wobei die Farben der Spielsteine und der Lernkarten aufeinander abgestimmt sind.

Bevorzugt sieht eine Fortbildung der Erfindung vor, dass das Spiel- und Lerngerät aus Kunststoff besteht und den Hohlkörper mit den an diesem an- oder eingeformten Elementen, die Schubladenplatte und die Spielsteine sowie die in einem festen Material ausgeführten Lernkarten umfasst.

An der Unterseite der Schubladenplatte sind zur Erhöhung der Rutschfestigkeit und zur Vermeidung von Kratzern - vorzugsweise in eingeprägten oder erhaben ausgebildeten ringförmigen Vertiefungen gehaltene - Gummifüße angeordnet.

### Beschreibungbevorzugte Ausfizhrun sbeispiele der Erfindung

Die Erfindung wird im Folgenden anhand von Ausführungsbeispielen unter Bezugnahme auf Figuren einer Zeichnung näher erläutert. Hierbei zeigen:

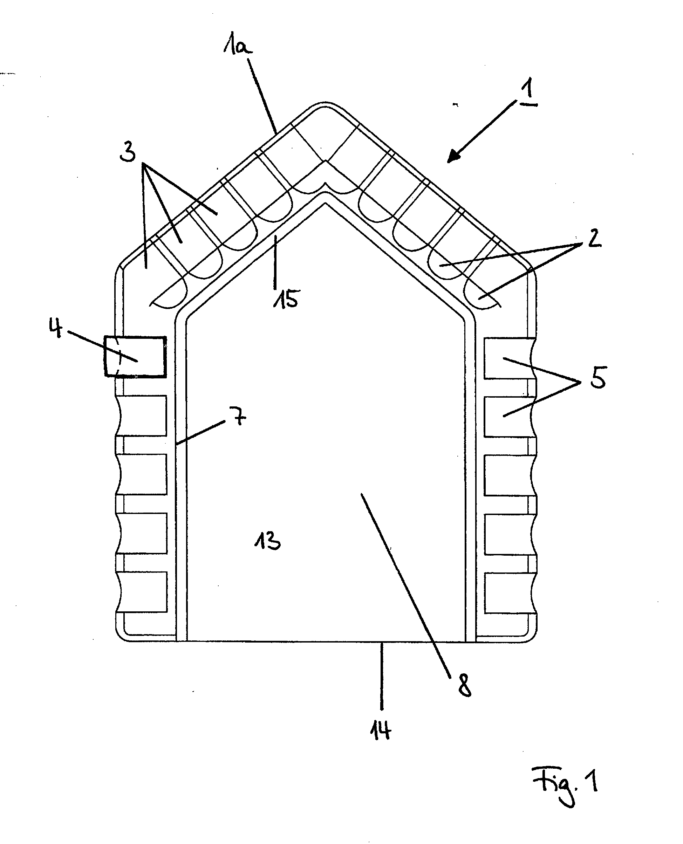

- Fig. 1: eine Vorderansicht des als Lernhaus ausgebildeten Lern- und Spielgerätes,

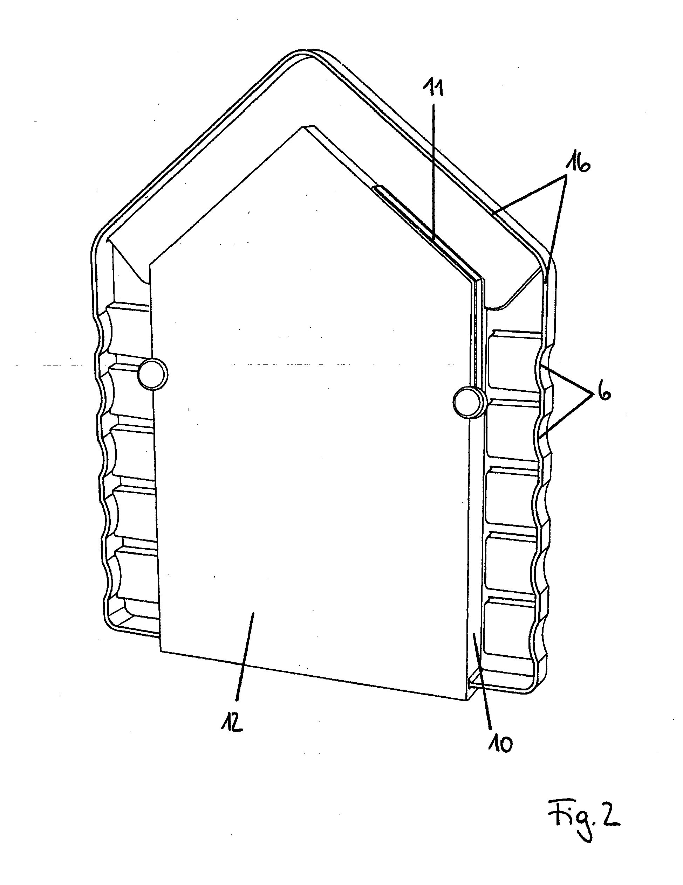

- Fig. 2: eine Rückansicht des Lemhauses mit eingeschobener Schubladenplatte,

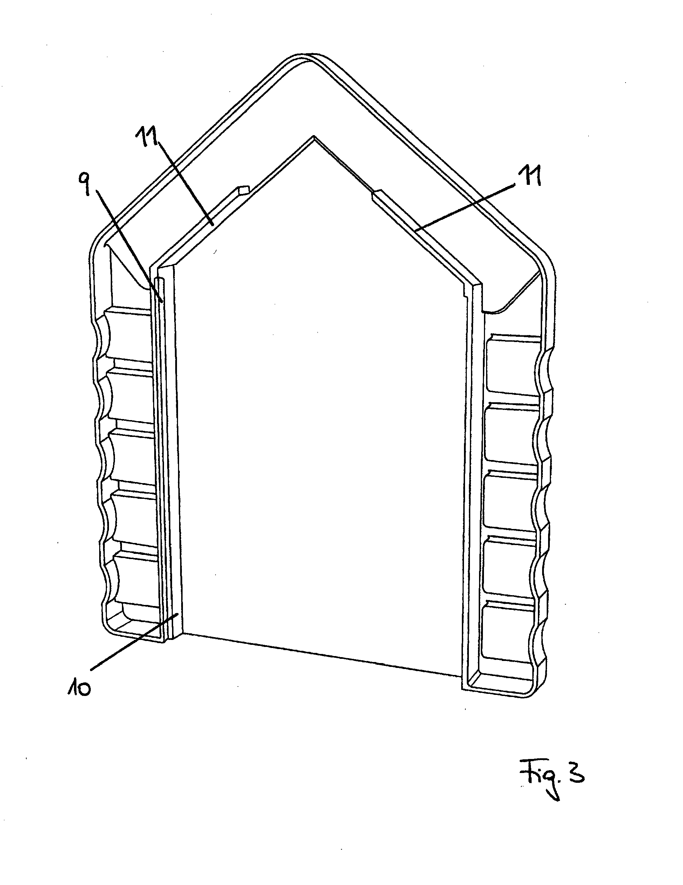

- Fig. 3: eine Rückansicht des Lemhauses, jedoch ohne Schubladenplatte und

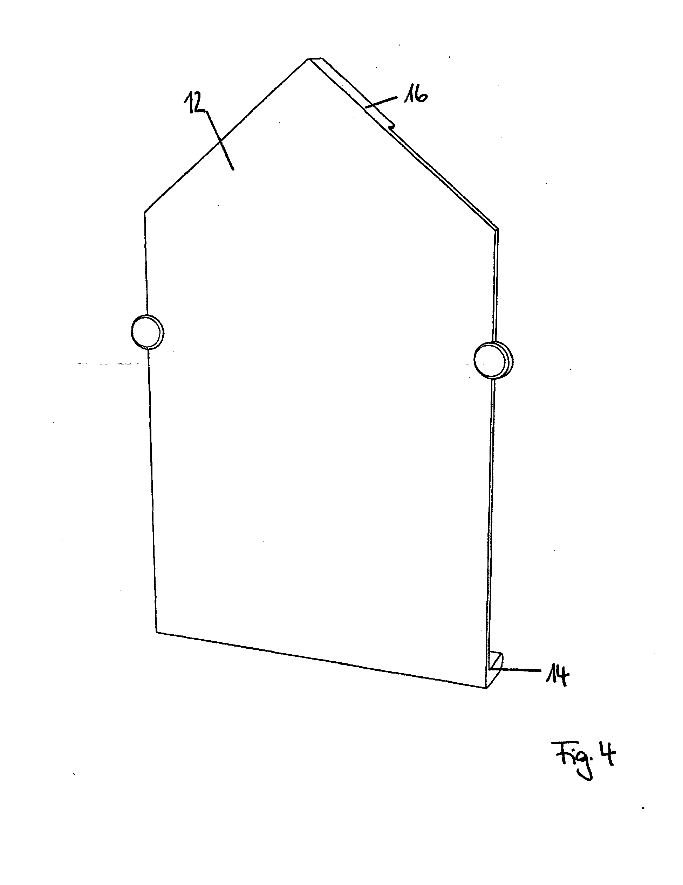

- Fig. 4: eine Schubladenplatte.

Wie die Zeichnung zeigt, umfasst das Lern- und Spielgerät einen von einer Vorderwand 1a und senkrechten - geraden und schrägen - Seitenwänden 1b begrenzten, flachen Hohlkörper 1 in Form eines Hauses, hier in den beispielhaften Abmessungen von 285mm x 210mm x 20mm, mit einer in dessen Rückseite integrierten, weiter unten beschriebenen Schublade. Die in der Vorderansicht dargestellte Vorderwand 1a bzw. Giebelwandseite des Hauses weist im Bereich der beiden Dachschrägen mehrere - hier jeweils fünf - nebeneinander ausgebildete, von einem halbkreisförmigen Vorsprung 2 ausgehende und zur Dachkante hin offene erste Vertiefungen 3 auf.

In die ersten Vertiefungen 3 sind verschiedenfarbige Spielsteine 4 eingesteckt, die an die halbkreisförmigen Vorsprünge 2 anschließen und deren obere Fläche in einer Ebene mit der oberen Fläche der Vorsprünge 2 liegt. Die in den ersten Vertiefungen 3 leicht lösbar verklemmten Spielsteine 4 haben in Verbindung mit den halbkreisförmigen Vorsprüngen 2 das Aussehen von Dachziegeln, die noch besser den Eindruck eines - hier auch als Lemhaus bezeichneten - Hauses vermitteln.

In die beiden Seitenränder der Vorderwand 1a (Giebelwandseite des Hauses) sind zur Seitenkante des Hauses hin offene zweite Vertiefungen 5 eingeformt, in die die Spielsteine 4 leicht verklemmbar, aber gleichermaßen leicht lösbar eingeschoben werden können. In die geraden Seitenwände 1a des Hohlkörpers 1 ist in Höhe der zweiten Vertiefungen 5 jeweils eine Einwölbung 6 eingeformt, so dass die Spielsteine 4, deren Außenkante über die Einwölbungen 6 in den geraden Seitenwänden 1a hinausragen, bequem aus den zweiten Vertiefungen 5 entnommen werden können. Anschließend an die ersten und zweiten Vertiefungen 3, 5 bildet die Vorderwand 1a (Giebelwandseite des Hauses) ein von einem umlaufenden Steg 7 begrenztes Ablagefach 8 für Lernkarten (nicht dargestellt), die auf der Vorderseite mit unterschiedlichen, jeweils einer zweiten Vertiefung 5 zugeordneten, farblich gekennzeichneten Aufgaben und auf der Rückseite mit der zu jeder Aufgabe gehörenden, als Farbe dargestellten Lösung bedruckt sind.

An der Rückseite des Hohlkörpers 1 sind - jeweils parallel zur geraden Seitenwand 1a - mit einer T-förmigen Führungsnut 9 versehene erste - seitliche - Schubladenwände 10 angeformt, die in zweite, parallel zu den schrägen Seitenwänden 1a des Hohlkörpers 1 verlaufende schräge Schubladenwände 11 übergehen. Eine Schubladenplatte 12 weist einen rechteckigen Abschnitt 13 mit einer an diesen angeformten geraden Abschlussplatte 14 und einen dreieckigen Abschnitt 15 auf. Im Bereich des rechteckigen Abschnitts 13 sind an den Längskanten T-förmige Führungsstege (nicht dargestellt) ausgebildet, die in die Führungsnuten 9 der seitlichen Schubladenwände 10 eingreifen.

An die Seitenkanten des dreieckigen Abschnitts 15 sind von der Spitze ausgehende kurze Wandabschnitte 16 angeformt, deren freie Stirnseiten in eingeschobenem Zustand der Schubladenplatte 13 an die freien Stirnseiten der schrägen Schubladenwände 11 anschließen und an diesen gehalten sind bzw. verrasten. Auf diese Weise ist in das Lemhaus eine geschlossene, sicher gehaltene Schublade zur Aufnahme der Lernkarten integriert.

Der obere Rand der Abschlussplatte 14 ragt geringfügig über die Oberfläche des Ablagefachs 8 hinaus und bildet somit einen Teil des das Ablagefach 8 begrenzenden umlaufenden Stegs 7 und erleichtert gleichzeitig das Herausziehen der Schubladenplatte 12. Die Oberfläche des Ablagefaches 8 kann entsprechend der Ausbildung eines Hauses gestaltet sein.

Zu Beginn des Lern- / Spielprozesses befinden sich die farbigen Spielsteine 4 in den ersten Vertiefungen 3 an den Dachschrägen. Das Kind entnimmt der Schublade eine erste Lernkarte und legt diese mit nach oben weisender Aufgabenseite in das Ablagefach 8, um dann die verschiedenen - farblich gekennzeichneten - Aufgaben durch Entnehmen des farblich zutreffenden Spielsteins 4 aus einer der ersten Vertiefungen 3 und Einstecken in die der Aufgabe benachbarte zweite Vertiefung 5 zu lösen. Nach dem Lösen aller Aufgaben (Umstecken aller Spielsteine 4 in die zweiten Vertiefungen 5) wird die Lernkarte gewendet, so dass die Lösungsseite nach oben zeigt und das Kind anhand der Farbübereinstimmung selbst kontrollieren kann, ob die Aufgaben richtig gelöst wurden.

Das zuvor beschriebene Lern- und Spielgerät ist kompakt ausgebildet. Die beidseitig mit den Aufgaben und den jeweiligen Lösungen bedruckten Lernkarten, die Steckvorrichtung (das Haus) und die Spielsteine sind in einem einzigen Spielgerät auf engem Raum untergebracht. Die farbigen Spielsteine sind verklemmt, aber lösbar in den ersten bzw. zweiten Vertiefungen gehalten und können sich nicht selbsttätig lösen. Das Gerät kann somit an den verschiedensten Spielorten selbständig von dem Kind oder mehreren Kindern benutzt werden und weist neben dem erzielbaren Lerneffekt aufgrund der selbständigen Handhabung aller Bestandteile auch einen hohen Spielwert auf und fördert die Geschicklichkeit des Kindes.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

### Bezugszeichenliste

- 1: Hohlkörper
- 1a: Vorderwand
- 1b: senkrecht (gerade und schräge) Seitenwände
- 2: halbkreisförmige Vorsprünge
- 3: erste Vertiefungen
- 4: Spielsteine
- 5: zweite Vertiefungen
- 6: Einwölbungen in 6
- 7: umlaufender Steg von 9
- 8: Ablagefach
- 9: Führungsnut
- 10: gerade Schubladenwand
- 11: schräge Schubladenwand
- 12: Schubladenplatte
- 13: rechteckiger Abschnitt von 12
- 14: Abschlussplatte
- 15: dreieckiger Abschnitt von 12
- 16: kurze Wandabschnitte von 12

## Patentansprüche

1. Spiel- und Lemgerät mit Selbstkontrolle, mit:
- einem flachen, durch eine Vorderwand (1a) und Seitenwände (1b) begrenzten Körper (1),
- einem auf einer Vorderwand (1a) des Körpers (1) gebildeten Ablagefach (8) zum Auflegen von Lernkarten, die eine Aufgabenseite und eine Lösungsseite aufweisen,
- ersten Vertiefungen (3) zur Anordnung einer Mehrzahl von durch unterschiedliche Kennzeichen individualisierten Spielsteinen (4) und
- den jeweiligen Aufgaben bzw. Lösungen auf einer im Ablagefach (8) abgelegten Lernkarte zugeordneten zweiten Vertiefungen (5) zum Einstecken der zu den Aufgaben jeweils passenden Spielsteine (4),
**dadurch gekennzeichnet, dass**
- der Körper (1) als Hohlkörper gebildet ist,
- in die offene Rückseite des Hohlkörpers (1) eine Schublade (12, 14) zur Unterbringung einer Mehrzahl der Lernkarten integriert ist,
- die ersten Vertiefungen (3) als Transportvertiefungen zur sicher gehaltenen Positionierung gebildet und frei von einer Zuordnung zu den Aufgaben bzw. Lösungen einer Lernkarte sind und
- die Spielsteine (4) in die ersten und zweiten Vertiefungen (3, 5) verrastbar oder verklemmbar, jedoch manuell leicht lösbar eingesteckt sind,
wobei die Außenkontur des Hohlkörpers (1) in Form eines Hauses ausgebildet ist, bei dem die ersten Vertiefungen (3) von den schrägen Dachkanten des Hauses und die zweiten Vertiefungen (5) von den beiden senkrechten Seitenkanten des Hauses ausgehen und in dem zwischen den beiderseitigen zweiten Vertiefungen liegenden Bereich das von einem umlaufenden Steg (7) begrenzte Ablagefach (8) ausgebildet ist.

2. Spiel- und Lemgerät nach Anspruch 1, **dadurch gekennzeichnet,** das die Spielsteine (4) und die Vertiefungen (3, 5) im Wesentlichen quaderförmig ausgebildet sind.

3. Spiel- und Lemgerät nach Anspruch 2, **dadurch gekennzeichnet, dass** auf der Vorderwand (1a) an die ersten Vertiefungen (3) anschließende halbkreisförmige Erhöhungen (2) ausgebildet sind, die zusammen mit den eingesteckten Spielsteinen (4) die Form von Dachziegeln aufweisen.

4. Spiel- und Lemgerät nach mindestens einem der vorangehenden Ansprüche, **dadurch gekennzeichnet, dass** im Bereich der zweiten Vertiefungen (5) in die Seitenwände (1b) Einwölbungen (6) zur Erleichterung der Entnahme der Spielsteine (4) eingeformt sind.

5. Spiel- und Lemgerät nach mindestens einem der vorangehenden Ansprüche, **dadurch gekennzeichnet, dass** die Schublade eine mit einer Anschlagplatte (14) versehene Schubladenplatte (12) umfasst, die in Führungsnuten (9) von an der Rückseite der Vorderwand (1a) des Hohlkörpers (1) ausgebildeten, die Schublade an den Längsseiten begrenzenden Schubladenwänden (11) geführt ist.

6. Spiel- und Lemgerät nach Anspruch 5, **dadurch gekennzeichnet, dass** die Schublade an ihren Schmalseiten durch die an der Vorderwand (1a) des Hohlkörpers (1) anschlagende Anschlagplatte (14) und durch an der gegenüberliegenden Seite der Schubladenplatte (12) ausgebildete Schubladenwände (11) sowie an der Rückseite der Vorderwand (1a) ausgebildete Wandabschnitte (16) begrenzt ist, wobei die freien Stirnseiten der Schubladenwände (11) und der Wandabschnitte (16) bei eingeschobener Schubladenplatte (12) aneinander verklemmt sind, um die Schubladenplatte (12) in der Schließposition zu arretieren.

7. Spiel- und Lemgerät nach Anspruch 6, **dadurch gekennzeichnet, dass** ein die Vorderwand (1a) des Hohlkörpers (1) überragender Rand der Anschlagplatte (14) die untere Begrenzung des Ablagefaches (8) für die Lernkarten bildet.

8. Spiel- und Lemgerät nach mindestens einem der vorangehenden Ansprüche, **dadurch gekennzeichnet, dass** die unterschiedliche Kennzeichnung der Bausteine und der auf der Lernkarte angegebenen Aufgaben durch unterschiedliche Farben erfolgt.

9. Spiel- und Lemgerät nach Anspruch 5, **dadurch gekennzeichnet, dass** an der Unterseite der Schubladenplatte (12) Gummifüße angebracht sind.

## Claims

1. Play and learning device with self-checking, comprising:
- a flat body (1) provided with a front wall (1a) and side walls (1b),
- a storage compartment (8) provided on the front wall (1a) of the body (1) for placing learning cards, which have a task side and an answer side,
- first recesses (3) for arranging a plurality of play blocks (4) individualised by different identifiers, and
- second recesses (5) assigned to the respective tasks and/or answers on a learning card deposited in the storage compartment (8) for inserting the play blocks (4) respectively matching the tasks,
**characterized in that**
- the body (1) is formed as a hollow body,
- a drawer (12, 14) provided on the open rear face of the hollow body (1) for accommodating a plurality of learning cards,
- the first recesses (3) are formed as transport recesses for a secure positioning and are free from an assignment to the tasks and answers of a learning card, and
- the play blocks (4) are configured to be latched or wedged into the first and second recesses (3, 5), but are inserted manually in an easily releasable manner,
wherein the outer contour of the hollow body (1) is configured in the form of a house, the first recesses (3) running from the oblique roof edges of the house, and the second recesses (5) running from the two vertical side edges of the house and the storage compartment (8) defined by a peripheral projection (7) being formed in the region located between the second recesses on both sides.

2. Device according to Claim 1, **wherein** the play blocks (4) and the recesses (3, 5) are configured to be substantially cuboidal.

3. Device according to Claim 2, **wherein** semi-circular raised portions (2) adjacent to the first recesses (3) are provided on the front wall (1a), which together with the inserted play blocks (4) take the form of roof tiles.

4. Device according to at least one of the preceding claims, **wherein,** in the region of the second recesses (5), concave portions (6) are moulded into the side walls (1b) for simplifying the removal of the play blocks (4).

5. Device according to at least one of the preceding claims, **wherein** the drawer comprises a drawer plate (12) provided with a stop plate (14), which is guided in guide grooves (9) from drawer walls (11) formed on the rear face of the front wall (1a) of the hollow body (1) and defining the drawer on the longitudinal sides.

6. Device according to Claim 5, **wherein** the drawer on its narrow sides is defined by the stop plate (14) adjacent to the front wall (1a) of the hollow body (1) and by drawer walls (11) formed on the opposing side of the drawer plate (12), as well as wall portions (16) formed on the rear face of the front wall (1a), the free front faces of the drawer walls (11) and the wall portions (16) being wedged against one another when the drawer plate (12) is inserted, in order to block the drawer plate (12) in the closed position.

7. Device according to Claim 6, **wherein** an edge of the stop plate (14) protruding over the front wall (1a) of the hollow body (1) forms the lower limit of the storage compartment (8) for the learning cards.

8. Device according to at least one of the preceding claims, **wherein** the blocks and the tasks provided on the learning card are differentiated by different colours.

9. Device according to Claim 5, **wherein** rubber feet are provided on the underside of the drawer plate (12).

## Revendications

1. Dispositif de jeu et d'apprentissage à autocontrôle, avec :
- un corps (1) plat, délimité par une paroi avant (1a) et une paroi arrière (1b),
- un compartiment de dépose (8) formé sur la paroi avant (1a) du corps (1) pour poser des cartes d'apprentissage qui présentent une face d'exercice et une face avec la solution,
- des premiers creux (3) pour placer une pluralité de palets (4) individualisés par différents marquages et
- des deuxièmes creux (5) associés aux exercices ou solutions concernés sur une carte d'apprentissage posée dans le compartiment de dépose (8), pour insérer les palets (4) s'accordant respectivement avec les exercices,
**caractérisé en ce que**
- le corps (1) est conçu en tant que corps creux,
- dans la face arrière ouverte du corps creux (1) est intégré un tiroir (12, 14) pour y loger une pluralité de cartes d'apprentissage,
- les premiers creux (3) sont conçus en tant que creux de transport pour le positionnement maintenu en toute sécurité et libre de toute association aux exercices ou aux solutions d'une carte d'apprentissage et
- les palets (4) sont insérés de manière enclenchable ou serrable dans les premiers et dans les deuxièmes creux (3, 5), tout en étant toutefois facilement amovibles manuellement,
le contour extérieur du corps creux (1) étant conçu sous la forme d'une maison, sur laquelle les premiers creux (3) sont formés par les arêtes de toit inclinées de la maison et les deuxièmes creux (5) partent des deux arêtes latérales verticales de la maison et dans la zone située entre les deuxièmes creux bilatéraux étant conçu le compartiment de dépose (8) délimité par un listel (7) périphérique.

2. Dispositif de jeu et d'apprentissage selon la revendication 1, **caractérisé en ce que** les palets (4) et les creux (3, 5) sont conçus en étant sensiblement en forme de parallélépipèdes.

3. Dispositif de jeu et d'apprentissage selon la revendication 2, **caractérisé en ce que** sur la paroi avant (1a) sont formées des élévations (2) en forme de demi-cercles se raccordant sur les premiers creux (3) qui ensemble avec les palets (4) insérés présentent la forme de tuiles.

4. Dispositif de jeu et d'apprentissage selon au moins l'une quelconque des revendications précédentes, **caractérisé en ce que** dans la zone des deuxièmes creux (5), des empreintes (6) sont moulées dans les parois latérales (1b), pour faciliter le retrait des palets (4).

5. Dispositif de jeu et d'apprentissage selon au moins l'une quelconque des revendications précédentes, **caractérisé en ce que** le tiroir comprend une plaque de tiroir (12) munie d'une plaque de butée (14) qui est guidée dans des rainures de guidage (9) de parois (11) de tiroir délimitant le tiroir sur les côtés longitudinaux, conçues sur la face arrière de la paroi avant (1a) du corps creux (1).

6. Dispositif de jeu et d'apprentissage selon la revendication 5, **caractérisé en ce que** le tiroir est délimité sur ses côtés étroits par la plaque de butée (14) butant sur la paroi avant (1a) du corps creux (1) et par les parois (11) de tiroir conçues sur le côté opposé de la plaque de tiroir (12), ainsi que par des parties de paroi (16) conçues sur la face arrière de la paroi avant (1a), lorsque la plaque de tiroir (12) est insérée, les faces frontales libres des parois de tiroir (11) et des parties de paroi (16) étant coincées les unes avec les autres, pour bloquer la plaque de tiroir (12) dans la position de fermeture.

7. Dispositif de jeu et d'apprentissage selon la revendication 6, **caractérisé en ce qu'**un bord de la plaque de butée (14) saillant par-dessus la paroi avant (1a) du corps creux (1) forme la délimitation inférieure du compartiment de dépose (8).

8. Dispositif de jeu et d'apprentissage selon au moins l'une quelconque des revendications précédentes, **caractérisé en ce que** le marquage différent des palets et des exercices mentionnés sur la carte d'apprentissage s'effectue par différentes couleurs.

9. Dispositif de jeu et d'apprentissage selon la revendication 5, **caractérisé en ce que** sur la face inférieure de la plaque de tiroir (12) sont montés des pieds en caoutchouc.
